# DEMANDE DE BREVET EUROPEEN

(11) **EP 4 557 120 A1**
(43) Date de publication de la demande: **21.05.2025**
(21) Numéro de dépôt: 23306979.8
(22) Date de dépôt: 15.11.2023
(51) Int. Cl.: G06F 16/25

(54) **AUTOMATE POUR LA GÉNÉRATION D'UN CODE SOURCE D'UNE APPLICATION DE GESTION DE DONNÉES DE RÉFÉRENCE**

(71) Demandeur: BULL SAS, 78340 Les Clayes-Sous-Bois (FR)
(72) Inventeur: ROUX, ETIENNE, 31400 TOULOUSE (FR); GOURVELLEC, JOSUE, 31200 TOULOUSE (FR); BERRADA, OMAR, 49070 Beaucouzé (FR)
(74) Mandataire: Cabinet Camus Lebkiri

(57) **Abrégé**

Un aspect de l'invention concerne un procédé de génération d'un code source lisible par une application de gestion de données de référence.

## Description

### DOMAINE TECHNIQUE DE L'INVENTION

Le domaine technique de l'invention est celui de la gestion de données de référence ou Master Data Management (MDM) en terminologie anglo-saxonne.

La présente invention concerne un procédé de génération d'un code source lisible par une application de gestion de données de référence, un procédé de génération d'un ensemble de données de référence depuis un code source lisible par une application de gestion de données de référence, et un procédé de mutation d'un code source lisible par une première application de gestion de données vers une deuxième application de gestion de donnée.

### ARRIERE-PLAN TECHNOLOGIQUE DE L'INVENTION

Il existe un grand nombre d'applications dédiées à la gestion de données de référence (en anglais « Master Data Management » - MDM). Ces applications sont éditées suivant des spécificités particulières faisant qu'il n'y a pas d'homogénéité entre les différents codes source pouvant être lus par lesdites applications. En d'autres termes, il n'existe pas de solution permettant de transposer un code source d'un modèle défini pour une application donnée en un code source de ce modèle lisible par une autre application de gestion de données de référence. Par ailleurs, les spécificités de chaque application de MDM font qu'il est peu aisé pour un utilisateur, souhaitant mettre en oeuvre une stratégie de gestion de données de référence, de déployer un modèle existant ou un nouveau modèle en utilisant une application qu'il ne maîtrise pas. Autrement dit, la mise en oeuvre d'une stratégie MDM nécessite que l'utilisateur ait une maîtrise avancée de l'application en question.

L'invention décrite ci-après propose donc une solution aux problèmes évoqués ci-dessus.

### RESUME DE L'INVENTION

L'invention offre une solution aux problèmes évoqués précédemment, en proposant un automate permettant de convertir des données de référence en code source, un code source en données de référence, ainsi qu'un code source en un autre code source.

Un premier aspect de l'invention concerne un procédé, mis en oeuvre par ordinateur, de génération d'un code source lisible par une application de gestion de données de référence, le procédé comprenant :
- Convertir un ensemble de données de référence en un ensemble formaté de données selon un ensemble de règles de conversion ;
- Transcrire, selon un ensemble de règles de transcription, l'ensemble formaté de données en code source lisible par l'application de gestion de données de référence.

On entend par « application de gestion de données de référence » (en anglais MDM pour « Master Data Management ») un ensemble de concepts, de processus et d'outils permettant de définir, stocker, maintenir, distribuer et imposer une vue complète, appelée « modèle », fiable et à jour des données de référence au sein d'un système d'information. Le modèle ainsi établi est indépendant des supports de communications, du secteur d'activité ou des subdivisions métiers ou géographiques d'une organisation pour laquelle est défini ce modèle.

On entend par « données de référence », également appelées données référentielles ou données maîtres (en anglais « master data »), des données communes aux processus d'information supportant les activités courantes d'une organisation, par exemple pour ses prises de décision. A titre d'exemple, les données de référence peuvent comprendre une définition du modèle au sens métier, une ou plusieurs règles de contrôle de cohérence et de qualité de l'information ainsi que des spécifications portant sur le flux de données en tant que tel, également appelées contrat d'interface (en anglais « Interface Contract ») définissant les règles des échanges de données entre deux interfaces.

On entend par « génération d'un code source » l'écriture d'un code source sous forme numérique sur un support de données pérenne tel qu'un fichier pouvant être sauvegardé sur une mémoire d'un système informatique, par exemple une mémoire d'un ordinateur, d'un serveur, d'un système de nuage (en anglais « cloud ») ou une mémoire d'un support de stockage mobile, tel une clef USB (en anglais « Universal Serial Bus ») ou un disque dur. Le fichier est, par exemple, dans un format pouvant contenir des caractères et pouvant être transféré d'un support de mémoire à un autre. Le format du fichier peut être lisible et interprétable par ladite application pour implémenter le code source que ce fichier contient et mettre en oeuvre le modèle qui y est décrit.

On entend que le code source est « lisible » par une application de MDM lorsque ledit code source est interprétable en tant que code source par l'application de MDM et peut être implémenté et déployé par l'application par simple lecture dudit code.

On entend par « ensemble formaté de données » que l'ensemble de données de référence est converti en un ensemble de données dont le formalisme d'écriture est formaté, c'est-à-dire imposé et défini, par l'ensemble de règles de conversion. L'ensemble de règles de conversion définit donc le formalisme d'écriture dans lequel formater l'ensemble de données de référence. L'ensemble de données de référence doit donc être écrit selon un format prédéfini compatible avec l'ensemble de règles de conversion.

On entend par « règles de transcription » des règles indiquant comment transcrire l'ensemble formaté de données en code source lisible par l'application concernée. L'ensemble de règles de transcription est donc associé à une seule application de MDM, c'est-à-dire que pour une autre application de MDM désirée, un autre ensemble de règles de transcription est utilisé pour produire le code source lisible par cette autre application.

Grâce à l'invention, il est possible de convertir automatiquement l'ensemble de données de référence en un code source lisible par l'application de gestion de données de référence. Cette conversion est transparente pour l'utilisateur car il n'est pas nécessaire que cette personne soit experte de ladite application pour l'utiliser. Ainsi, le déploiement d'un nouveau modèle de gestion de données de référence, renseigné via l'ensemble de données de référence, est aisément mis en oeuvre automatiquement par le procédé. En d'autres termes, le procédé selon l'invention sert d'interface de transposition de l'ensemble de données de référence en un code source lisible par l'application de gestion de données de référence désirée, indépendamment de l'application en question, grâce à l'utilisation de l'ensemble formaté de données, notamment via sa conversion et sa transcription.

Par ailleurs, grâce à l'invention, l'ensemble de données de référence peut se présenter dans un format « métier », c'est-à-dire dans un format qui ne nécessite aucune compétence de programmation particulière et qui est proche du langage courant.

Avantageusement, il est possible d'utiliser le procédé 100 à des fins de développement pour évaluer la sensibilité d'un modèle à une modification dans l'ensemble de données de référence. Autrement dit, il est possible de facilement mettre en oeuvre un ou plusieurs variantes d'un modèle de MDM, via une même ou différentes applications de MDM, et d'évaluer l'effet de la mise en oeuvre de chaque variante sur le modèle mis en oeuvre. En effet, la conversion en ensemble formaté de données permet de produire facilement ces variantes depuis l'ensemble de données de référence et de les transcrire en code source pour chaque application de MDM concernée, sans avoir à construire chaque variante pour chaque application, et sans devoir disposer des compétences de programmation nécessaires pour concevoir les codes source.

Le procédé vient donc améliorer le contrôle que l'utilisateur a sur le ou les modèles de MDM qu'il souhaite mettre en oeuvre, qu'il peut alors facilement adapter à ses besoins.

Outre les caractéristiques qui viennent d'être évoquées, le procédé selon le premier aspect de l'invention peut présenter une ou plusieurs caractéristiques complémentaires parmi les suivantes, considérées individuellement ou selon toutes les combinaisons techniquement possibles.

Dans un mode de réalisation, le procédé selon le premier aspect comprend, en outre, la transmission du code source à l'application de gestion de données de référence.

Il est ainsi possible d'automatiquement transmettre le code source généré à l'application de gestion de données afin, par exemple, qu'elle mette en oeuvre l'implémentation du modèle qui y est défini.

Dans un mode de réalisation, le procédé selon le premier aspect comprend :
- Détecter une incohérence dans l'ensemble de données de référence par comparaison avec un ensemble de règles de contrôle et/ou un précédent ensemble de données de référence ;
et dans lequel la conversion et la transcription sont mises en oeuvre lorsqu'aucune incohérence dans l'ensemble de données de référence n'est détectée

On entend par « incohérence » une anomalie dans la forme ou le contenu des données de l'ensemble de données de référence. Cette anomalie peut résulter d'une ou plusieurs données manquantes, mal définies et/ou dans un format et/ou une structure incompatible avec le format prédéfini. Un ensemble de données de référence avec une incohérence ne serait donc pas compatible avec les règles de conversion. Par exemple, une anomalie peut être l'absence de codes postaux dans une liste d'adresses, ou l'écriture en format alphabétique de chiffres attendus en format numéraire.

On entend par « règles de contrôle » des règles précisant les données nécessaires que doit contenir l'ensemble de données de référence pour construire l'ensemble formaté de données afin de construire le modèle pour l'application de MDM.

On entend par « précédent ensemble de données de référence » un ensemble de données de référence établi préalablement et qui est compatible avec les règles de conversion.

Il est ainsi possible de détecter de façon précoce une erreur dans les données de référence afin de ne pas effectuer la conversion à partir de données de référence incomplètes ou erronées.

Autrement dit, le procédé permet de faire passer des règles de contrôle de cohérence sur l'ensemble de données de référence afin de vérifier que la modélisation est décrite proprement dans ces données. En particulier, les règles de contrôle permettent de vérifier que la structure de l'ensemble de données de référence est conforme à une ou plusieurs règles de construction, que le modèle est fonctionnel, c'est-à-dire qu'il peut être lu et interprété sans erreur, et que ce modèle est conforme au contrat d'interface. Ceci assure donc que l'ensemble formaté de données décrit correctement le modèle pour permettre sa transcription en code source.

Dans un mode de réalisation, le procédé selon le premier aspect comprend, en outre :
- Emettre une alerte portant sur l'incohérence détectée.

Il est ainsi possible d'informer l'utilisateur afin qu'il modifie l'ensemble de données de référence avant la conversion de l'ensemble de données de référence.

Un deuxième aspect de l'invention concerne un procédé, mis en oeuvre par ordinateur, de génération d'un ensemble de données de référence depuis un code source lisible par une application de gestion de données de référence, le procédé comprenant :
- Transcrire, selon un ensemble de règles de rétrotranscription, le code source en un ensemble formaté de données ;
- Convertir l'ensemble formaté de données en l'ensemble de données de référence selon un ensemble de règles de rétro-conversion.

Grâce à ce procédé, il est possible de mettre en oeuvre le mécanisme inverse du procédé selon le premier aspect, c'est-à-dire qu'il est possible, par exemple pour des besoins de documentation, d'archivage, d'analyse ou de modification, de produire l'ensemble de données de référence à partir du code source qui décrit le modèle.

Dans un mode de réalisation, le procédé selon le deuxième aspect comprenant :
- Détecter une incohérence dans l'ensemble de données de référence par comparaison avec un ensemble de règles de contrôle et/ou un précédent ensemble de données de référence.

Il est ainsi possible de détecter une erreur dans les données de référence, par exemple due à un dysfonctionnement de la génération de l'ensemble de données de référence et/ou du fait d'une anomalie dans le modèle qui décrit le code source.

Dans un mode de réalisation, le procédé selon le deuxième aspect comprend, en outre :
- Emettre une alerte portant sur l'incohérence détectée.

Il est ainsi possible d'informer l'utilisateur de la présence d'une incohérence.

Un troisième aspect de l'invention concerne un procédé, mis en oeuvre par ordinateur, de mutation d'un premier code source, lisible par une première application de gestion de données, en un deuxième code source lisible par une deuxième application de gestion de données, le procédé comprenant :
- Transcrire, selon un ensemble de règles de rétrotranscription, le premier code source en un ensemble formaté de données;
- Transcrire, selon un ensemble de règles de transcription, l'ensemble formaté de données en le deuxième code source.

Grâce à ce procédé, il est possible de combiner les procédés selon les premier et deuxième aspects afin de transcrire un code source pour la mise en oeuvre d'un modèle dans une première application de MDM vers une deuxième application de MDM, en générant l'ensemble de données de référence à partir du code source lisible par la première application, puis en générant un code source lisible par la deuxième application à partir de cet ensemble de données de référence.

Dans un mode de réalisation du procédé selon le troisième aspect, le premier code source est rétro-transcrit en un premier ensemble formaté de données, et comprenant :
- Convertir le premier ensemble formaté de données en un ensemble de données de référence selon un ensemble de règles de rétro-conversion ;
- Convertir l'ensemble de données de référence en un deuxième ensemble formaté de données selon un ensemble de règles de conversion, le deuxième code source étant transcrit à partir du deuxième ensemble formaté de données.

Il est ainsi possible de bénéficier de la conversion du modèle en ensemble de données de référence afin de permettre à l'utilisateur de vérifier et/ou modifier aisément ce modèle. Ceci permet également de conserver le modèle, par exemple à des fins d'archivage ou de documentation, ou pour la génération d'un code source lisible par une autre application de MDM.

Dans un mode de réalisation, le procédé selon le troisième aspect comprend :
- Détecter une incohérence dans l'ensemble de données de référence par comparaison avec un ensemble de règles de contrôle et/ou un précédent ensemble de données de référence ;
et dans lequel la conversion de l'ensemble de données de référence en le deuxième ensemble formaté de données est mise en oeuvre lorsqu'aucune incohérence dans l'ensemble de données de référence n'est détectée.

Il est ainsi possible de détecter de façon précoce une erreur dans les données de référence afin de ne pas effectuer la conversion à partir de données de référence incomplètes ou erronées.

Dans un mode de réalisation, le procédé selon le troisième aspect comprend, en outre :
- Emettre une alerte portant sur l'incohérence détectée.

Il est ainsi possible d'informer l'utilisateur afin qu'il modifie l'ensemble de données de référence avant la conversion de l'ensemble de données de référence.

Dans un mode de réalisation du procédé selon le premier, le deuxième et/ ou le troisième aspect, l'ensemble de données de référence est construit conformément à au moins une règle de construction.

La règle de construction définit le format dans lequel l'ensemble de données de référence doit être écrit pour être compatible avec l'ensemble de règles de conversion.

Dans un mode de réalisation du procédé selon le premier, le deuxième et/ou le troisième aspect :
- L'ensemble de données de référence est compris dans un fichier qui est dans un format de type tableur construit selon la au moins une règle de construction ;
- L'ensemble formaté de données est compris dans un fichier qui est dans un format de type balisage générique ;
- L'ensemble de règles de transcription et/ou de rétrotranscription sont compris dans un fichier établi dans un langage de transformation de type fonctionnel.

Dans un mode de réalisation du procédé selon le premier, le deuxième et/ou le troisième aspect, le fichier comprenant l'ensemble de données de référence est au format XLS ou XLSX, le fichier comprenant l'ensemble formaté de données est au format XML, et le fichier comprenant l'ensemble de règles de transcription et/ou de rétrotranscription est au format XSLT.

Les fichiers utilisés ont donc des formats connus et faciles à utiliser, permettant la versatilité de leur utilisation et leur compatibilité avec les méthodes de MDM du marché.

Un quatrième aspect de l'invention concerne un système informatique configuré pour mettre en oeuvre un procédé selon le premier, le deuxième et/ou le troisième aspect.

Un cinquième aspect de l'invention concerne un produit-programme d'ordinateur comprenant des instructions qui, quand le programme est exécuté sur un ordinateur, conduisent celui-ci à mettre en oeuvre les étapes du procédé selon le premier, le deuxième et/ou le troisième aspect.

Un sixième aspect de l'invention concerne un support d'enregistrement lisible par ordinateur comprenant des instructions qui, lorsqu'elles sont exécutées par un ordinateur, conduisent celui-ci à mettre en oeuvre les étapes du procédé selon le premier, le deuxième et/ou le troisième aspect.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant l'enchaînement des étapes d'un procédé de génération d'un code source, selon un mode de réalisation.
- La figure 2 est une représentation schématique illustrant la génération d'un code source, selon un mode de réalisation.
- La figure 3 est un schéma synoptique illustrant l'enchaînement des étapes d'un procédé de génération d'un ensemble de données de référence, selon un mode de réalisation.
- La figure 4 est une représentation schématique illustrant la génération d'un ensemble de données de référence, selon un mode de réalisation.
- La figure 5 est un schéma synoptique illustrant l'enchaînement des étapes d'un procédé de mutation d'un code source en un autre code source, selon un mode de réalisation.
- La figure 6 est une représentation schématique illustrant la mutation d'un code source en un autre code source, selon deux modes de réalisation.
- La figure 7 est une représentation schématique d'un système pour implémenter un procédé, selon un mode de réalisation.
- La figure 8 est une représentation schématique d'un mode de réalisation particulier de la génération d'un code source et de la génération d'un ensemble de données de référence.

### DESCRIPTION DETAILLEE

Sauf précision contraire, un même élément apparaissant sur des figures différentes présente une référence unique.

Tel que présenté ci-après, la présente invention porte sur un ensemble de mécanismes pour générer un code source lisible par une application de gestion de données de référence (MDM), pour générer un ensemble de données de référence, et pour muter un code source vers un code source lisible par une autre application de MDM.

Ces différents mécanismes peuvent être indépendamment mis en oeuvre par un même module, par la suite appelé « automate ». Cet automate est détaillé plus amplement par la suite.

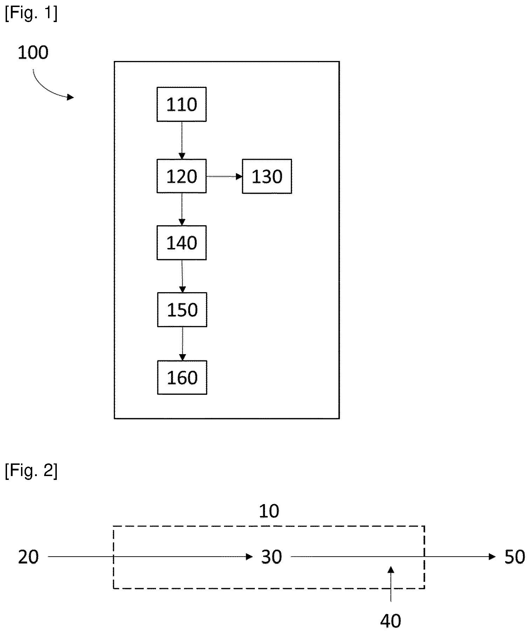

Un premier aspect de l'invention concerne donc un procédé 100 de génération d'un code source lisible par une application de gestion de données de référence, ainsi qu'illustré sur la figure 1. Ce procédé 100 peut être mis en oeuvre par l'automate.

Ainsi qu'illustré sur la figure 2, ce procédé 100 permet de générer un code source 50 en fournissant un ensemble 20 de données de référence à l'automate 10, lequel convertit d'abord l'ensemble 20 de données de référence en un ensemble formaté 30 de données, puis convertit ce dernier en code source 50 en se basant sur un ensemble 40 de règles de transcription.

L'ensemble 20 de données de référence est, par exemple, prédéfini automatiquement ou par un utilisateur, selon au moins une règle de construction, c'est-à-dire que cet ensemble est préconfiguré conformément à la règle de construction. Cette règle de construction est préétablie de sorte que l'ensemble 20 de données de référence soit construit selon un format connu et attendu, afin d'être automatiquement converti en l'ensemble formaté 30 de données par l'automate 10. L'ensemble 20 de données de référence comprend et/ou décrit le modèle à mettre en oeuvre par l'application de MDM.

Le procédé 100 peut comprendre une étape 110 d'obtention de l'ensemble de données de référence.

Le procédé 100 comprend une étape 140 de conversion de l'ensemble 20 de données de référence en l'ensemble formaté 30 de données. Cette conversion est mise en oeuvre en respectant des règles de conversion comprises dans un ensemble de règles de conversion. Ces règles de conversion indiquent comment transformer l'ensemble 20 de données de référence en l'ensemble formaté 30 de données. Par exemple, ces règles de conversion indiquent comment transformer l'ensemble de données de référence construit selon un format spécifique défini par la règle de construction, par exemple un format spécifiquement prédéfini pour permettre une conversion rapide de l'ensemble de données de référence en un format générique indépendant du modèle, de l'utilisation visée du modèle et de l'application MDM en question. L'intérêt d'un tel ensemble formaté 30 de données est de disposer d'une définition du modèle souhaité dans un format générique pouvant être, par la suite, converti dans n'importe quel code source d'une application de MDM.

Le procédé 100 comprend également une étape 150 de transcription de l'ensemble formaté 30 de données en le code source 50 lisible par l'application de MDM. La transcription est effectuée en appliquant les règles d'un ensemble 40 de règles de transcription, lesquelles indiquent comment produire le code source 50 à partir de l'ensemble formaté 30 de données. L'ensemble 40 de règles de transcription est donc associé à l'application de MDM en question, c'est-à-dire qu'en cas de transcription vers une autre application de MDM, un autre ensemble de règles de transcription est utilisé pour générer le code source 50 afférent. Cet autre ensemble 40 de règles de transcription peut être similaire ou différent de l'ensemble 40 de règles de transcription.

Le procédé 100 peut également comprendre une étape 160 de transmission du code source lisible par l'application de MDM en question vers ladite application de MDM. Cette application disposera alors du code source 5 à implémenter pour mettre en oeuvre le modèle tel que défini par l'ensemble 20 de données de référence.

Dans un mode de réalisation, le procédé 100 comprend une étape 120 de détection d'une incohérence dans l'ensemble 20 de données de référence. L'incohérence est, par exemple, détectée en confrontant l'ensemble 20 de données de référence à un ensemble de règles de contrôle. Cet ensemble de règles de contrôle définit un format et/ou un contenu attendu de l'ensemble 20 de données de référence pour que la conversion puisse être effectuée. S'il y a incohérence, alors la conversion ne peut être mise en oeuvre.

Alternativement ou conjointement, l'incohérence peut être détectée en comparant l'ensemble 20 de données de référence à un précédent ensemble 20 de données de référence. La structure, le format et le contenu des deux ensembles 20 de données de référence peuvent ainsi être comparés afin de détecter des différences entre ces deux ensembles. Lorsque la différence porte sur un élément qui doit satisfaire les règles de contrôle, alors une incohérence est détectée.

L'incohérence est donc détectée entre l'ensemble de données de référence et l'ensemble de règles de contrôle et/ou le précédent ensemble de données de référence.

Le procédé 100 peut alors comprendre une étape 130 d'émission d'une alerte portant sur l'incohérence détectée. L'alerte sert à informer l'utilisateur qu'une incohérence est détectée dans l'ensemble 20 de données de référence. L'alerte comprend, par exemple, une information indiquant la présence d'un incohérence, par exemple sous la forme d'un message d'erreur comprenant des caractères alphanumériques. L'alerte peut également comprendre une information pour indiquer la localisation et/ou la nature de l'incohérence dans l'ensemble 20 de données de référence. L'utilisateur peut alors effectuer une action pour corriger l'ensemble 20 de données de référence.

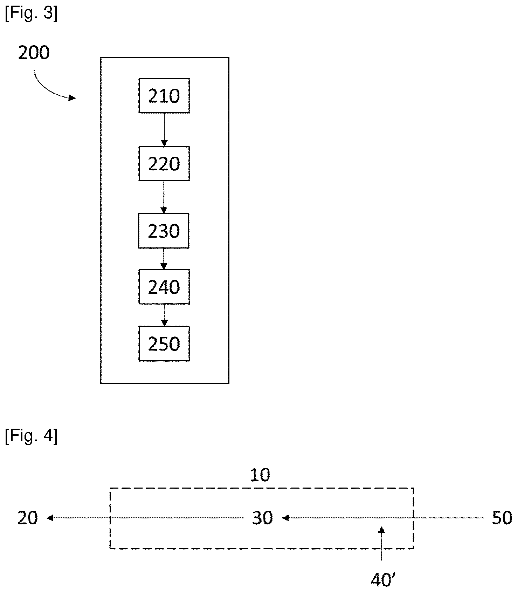

En outre, un deuxième aspect de l'invention concerne un procédé 200 de génération d'un ensemble 20 de données de référence, ainsi qu'illustré sur la figure 3. Ce procédé 200 peut être mis en oeuvre par l'automate.

Ainsi qu'illustré sur la figure 4, ce procédé 200 permet de générer un ensemble 20 de données de référence en fournissant un code source 50 à l'automate 10, lequel convertit d'abord le code source 50 en un ensemble formaté 30 de données en se basant sur un ensemble 40' de règles de rétrotranscription, puis convertit l'ensemble formaté 30 de données en l'ensemble 20 de données de référence.

Le procédé 200 peut comprendre une étape 210 d'obtention du code source 50, lequel est lisible par une application de gestion de MDM. Le code source 50 est préalablement établi et défini un modèle de gestion de données de sorte que son implémentation par l'application de MDM permet de mettre en oeuvre ce modèle.

Le procédé 200 comprend une étape 220 de transcription du code source 50 lisible par l'application de MDM en l'ensemble formaté 30 de données. La transcription est effectuée en appliquant les règles de l'ensemble 40' de règles de rétrotranscription, lesquelles indiquent comment produire l'ensemble formaté 30 de données à partir du code source 50. L'ensemble 40' de règles de rétrotranscription est donc associé à l'application de MDM en question, c'est-à-dire qu'en cas de transcription d'un code source 50 lisible par une autre application de MDM, un autre ensemble 40' de règles de rétrotranscription est utilisé pour générer l'ensemble formaté 30 de données afférent. Cet autre ensemble 40' de règles de rétrotranscription peut être similaire ou différent de l'ensemble 40' de règles de rétrotranscription.

Les règles de rétrotranscription sont, par exemple, les règles inverses, ou réciproques, des règles de transcription utilisées par la mise en oeuvre du procédé 100, associées à la même application de MDM.

Le procédé 200 comprend également une étape 230 de conversion de l'ensemble formaté 30 de données en l'ensemble 20 de données de référence. Cette conversion est mise en oeuvre en respectant des règles de rétro-conversion comprises dans un ensemble de règles de rétro-conversion. Ces règles de rétro-conversion indiquent comment transformer l'ensemble formaté 30 de données en l'ensemble 20 de données de référence. Par exemple, ces règles de conversion indiquent comment transformer l'ensemble formaté 30 de données construit selon un format générique, indépendant du modèle, de l'utilisation visée du modèle et de l'application MDM en question, en un format spécifique. L'intérêt de construire un tel ensemble 20 de données de référence est de disposer d'une définition du modèle souhaité sous une forme compréhensible et manipulable par un utilisateur sans qu'il soit requis que celui-ci ait une maitrise avancée de l'application de MDM d'où provient le modèle.

Les règles de rétro-conversion sont, par exemple, les règles inverses des règles de conversion utilisées pour la mise en oeuvre du procédé 100.

L'ensemble 20 de données de référence est, par exemple, automatiquement construit selon au moins une règle de construction, telle que la règle de construction mentionnée plus haut, dans le cas du procédé 100.

Ce procédé permet, par ailleurs, d'extraire les métadonnées contenues dans le code source et qui sont propres à l'application de MDM dans laquelle le code source est implémenté. Ces métadonnées sont donc également rétro-converties et comprises dans l'ensemble de données de référence construit.

Dans une mode de réalisation, le procédé 200 comprend une étape 240 de détection d'une incohérence dans l'ensemble 20 de données de référence construit à l'étape 230 précédente. Cette étape 240 de détection d'une incohérence est mise en oeuvre suivant les mêmes modalités que l'étape 120 de détection d'une incohérence du procédé 100.

Le procédé 200 peut alors comprendre une étape 250 d'émission d'une alerte portant sur l'incohérence détectée à l'étape 240 de détection précédente. Cette étape 250 d'émission d'une alerte est mise en oeuvre suivant les mêmes modalités que l'étape 130 d'émission d'une alerte du procédé 100.

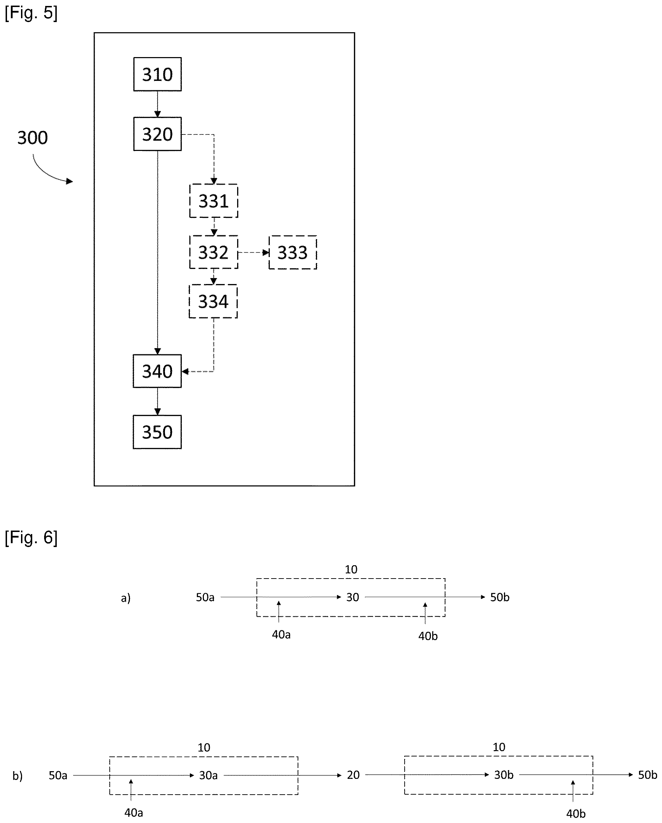

Par ailleurs, l'invention porte également sur un procédé 300 de mutation d'un code source, ainsi qu'illustré sur la figure 5. La mutation permet de transformer un code source lisible par une première application de MDM en un code source lisible par une deuxième application de MDM. Il s'agit donc d'une mutation du code source lisible par la première application vers la deuxième application. En d'autres termes, ce procédé 300 permet de migrer le modèle mis en oeuvre par la première application vers la deuxième application pour que cette dernière puisse le mettre en oeuvre. Ce procédé 300 peut être mis en oeuvre par l'automate.

Ainsi qu'illustré sur la figure 6, ce procédé 300 permet de générer un deuxième code source 50b, lisible par la deuxième application, en fournissant un premier code source 50a, lisible par la première application. Deux variantes peuvent être envisagées pour effectuer cette mutation :
- Dans la première variante, illustrée sur la figure 6a, le premier code source 50a est fourni à l'automate 10, lequel transcrit ce premier code source 50a en un ensemble formaté 30 de données en se basant sur un ensemble 40a de règles de rétrotranscription. L'ensemble formaté 30 de données est ensuite transcrit en le deuxième code source 50b en se basant sur un ensemble 40b de règles de transcription ;
- Dans la seconde variante, illustrée sur la figure 6b, le premier code source 50a est fourni à l'automate 10, lequel transcrit ce premier code source 50a en un premier ensemble formaté 30 de données en se basant sur un ensemble 40a de règles de rétrotranscription, puis l'automate rétro-convertit le premier ensemble formaté 30a de données en un ensemble 20 de données de référence, conformément à l'ensemble de règles de construction. L'ensemble 20 de données de référence est alors converti, par l'automate 10, en un deuxième ensemble formaté 30b de données. Ce dernier est ensuite transcrit en le deuxième code source 50b en se basant sur un ensemble 40b de règles de transcription. En d'autres termes, cette deuxième variante est équivalente à mettre en oeuvre le procédé 200, à partir du premier code source 50a, puis à mettre en oeuvre le procédé 100, pour générer le deuxième code source 50b à partir de l'ensemble de données de référence produit généré par la mise en oeuvre procédé 200.

L'intérêt de la première variante est de pouvoir automatiquement muter le code source vers la deuxième application en limitant le nombre d'opérations intermédiaires et les risques d'erreurs par les conversion et rétro-conversion successives. L'intérêt de la seconde variante est de permettre à un utilisateur de modifier ou contrôler le modèle en modifiant l'ensemble 20 de données de référence, lequel ne nécessite pas d'avoir une maîtrise avancée des première et deuxième applications de MDM pour être en mesure de modifier modèle.

Le procédé 300 peut comprendre une étape 310 d'obtention du premier code source 50a. Le premier code source 50a est établi préalablement à la mise en oeuvre du procédé 300 et définit un modèle de gestion de données de sorte que son implémentation par la première application permet de mettre en oeuvre ce modèle.

Le procédé 300 comprend une étape 320 de transcription du premier code source 50a lisible par la première application de MDM en l'ensemble formaté 30 de données. Cette étape 320 de transcription est mise en oeuvre de façon similaire à l'étape 220 de transcription du procédé 200. L'ensemble de règles de rétrotranscription est ici associé à la première application de MDM.

Le procédé 300 comprend également une étape 340 de transcription de l'ensemble formaté 30 de données en le deuxième code source 50b. Cette étape 340 de transcription est mise en oeuvre de façon similaire à l'étape 150 de transcription du procédé 100. L'ensemble de règles de transcription est ici associé à la deuxième application de MDM et est donc différent de l'ensemble de règles de rétrotranscription utilisé à l'étape 320 précédente.

Le procédé 300 peut également comprendre une étape 350 de transmission du deuxième code source 50b vers la deuxième application de MDM. Cette étape 350 de transmission est mise en oeuvre de façon similaire à l'étape 160 de transmission du procédé 100.

Les étapes 310 d'obtention du premier code source 50a, 320 de transcription du premier code source 50a, 340 de transcription en le deuxième code source 50b et 350 de transmission du deuxième code source 50b sont communes aux deux variantes de ce procédé 300.

Selon la seconde variante, le procédé 300 comprend les étapes précédemment évoquées ainsi que des étapes supplémentaires entre l'étape 320 de transcription du premier code source 50a et l'étape 340 de transcription en le deuxième code source 50b. Ces étapes supplémentaires correspondent aux étapes de conversion et de rétro-conversion de l'ensemble de données de référence.

Par ailleurs, dans cette variante, l'ensemble formaté 30 de données rétro-transcrit depuis le premier code source 50a est appelé le premier ensemble formaté 30a de données.

Ainsi, le procédé 300 selon la seconde variante comprend, en outre, une étape 331 de conversion du premier ensemble formaté 30 de données en l'ensemble 20 de données de référence. Cette conversion est mise en oeuvre de façon similaire à la mise en oeuvre de l'étape 230 de conversion du procédé 200. L'utilisateur peut ainsi disposer des données de référence du modèle afin de les analyser, les vérifier et/ou, au besoin, les modifier avant d'effectuer la conversion vers la deuxième application de MDM.

Le procédé 300 selon la seconde variante comprend également une étape 334 de conversion de l'ensemble 20 de données de référence en un deuxième ensemble formaté 30b de données. C'est ce deuxième ensemble formaté 30b de données qui est, par la suite, utilisé à l'étape 340 de transcription de l'ensemble formaté 30 de données en le deuxième code source 50b.

Par ailleurs, le procédé 300 peut comprendre, dans cette seconde variante, une étape 332 de détection d'une incohérence dans l'ensemble 20 de données de référence. Cette étape 332 de détection d'incohérence est mise en oeuvre de façon similaire à l'étape 120 du procédé 100. Cette étape permet de déterminer si une erreur est survenue à la rétrotranscription ou à la rétro-conversion, nécessitant de modifier l'ensemble 20 de données de référence généré à l'étape précédente, ou si une modification par l'utilisateur a généré une incohérence. Il est ainsi possible d'appliquer un correctif à l'ensemble 20 de données de référence pour corriger cet ensemble, ou de mettre à nouveau en oeuvre les étapes du procédé 300. Il peut également être mis en oeuvre un correctif pour corriger l'ensemble 40a de règles de rétrotranscription et/ou de rétro-conversion, le cas échéant, à l'origine de l'erreur. Ainsi, lorsqu'une incohérence est détectée, les étapes du procédé 300 servant à générer le deuxième code source 50b à partir de l'ensemble 20 de données de référence ne sont pas mises en oeuvre, c'est-à-dire les étapes 334, 340 et 350.

Le procédé 300 peut alors comprendre une étape 333 d'émission d'une alerte portant sur l'incohérence détectée. Cette étape peut être mise en oeuvre de manière similaire à l'étape 170 d'émission de l'alerte du procédé 100.

En d'autres termes, le procédé 300 selon la deuxième variante est équivalent à :
- Générer un ensemble de données de référence depuis le premier code source en mettant en oeuvre le procédé 200 ;
- Générer le deuxième code source à partir de l'ensemble de données de référence, en mettant en oeuvre le procédé 100.

L'ensemble de règles de conversion, utilisé dans le procédé 100 et/ou le procédé 300, est établi préalablement à la mise en oeuvre du procédé 100, par exemple par des approches connues en soi. De même, l'ensemble de règles de rétro-conversion, utilisé dans le procédé 200 et/ou le procédé 300, est établi préalablement à la mise en oeuvre du procédé 100, par exemple par des approches connues en soi.

L'ensemble 40 de règles de transcription, utilisé dans le procédé 100 et/ou le procédé 300, est établi préalablement à la mise en oeuvre du procédé 100, par exemple par des approches connues en soi. De même, l'ensemble 40 de règles de rétrotranscription, utilisé dans le procédé 200 et/ou le procédé 300, est établi préalablement à la mise en oeuvre du procédé 100, par exemple par des approches connues en soi.

Dans certains cas, les évolutions logicielles et matérielles d'une organisation font que les règles de construction des données de référence sont amenées à changer, par exemple pour des raisons de mise à jour, de mise à niveau ou de correctifs.

Dans ces cas, il est possible de comparer, avec un ensemble formaté de données déjà existant, un ensemble formaté de données provenant de la conversion d'un ensemble de données de référence construit suivant les règles de constructions modifiées à la suite de ces évolutions. La conversion de cet ensemble de données provenant de règles modifiées est effectuée en utilisant un ensemble de règles de conversion également modifié à la suite des évolutions en question. L'ensemble formaté de données déjà existant sert alors de référence, et peut être obtenu via la mise en oeuvre de l'un des procédés 100, 200 ou 300.

L'intérêt de cette comparaison est de vérifier que les règles de construction modifiées et que les règles de conversion modifiées sont conformément établies afin de produire un ensemble formaté de données, issu de ces modifications, compatible avec la transcription en code source.

Ainsi, lorsqu'une non-conformité de l'ensemble formaté de données issu de ces modifications est détectée, une alerte est émise afin de prévenir l'opérateur ou l'utilisateur que les règles de construction modifiées et/ou les règles de conversion modifiées ne sont pas conformes.

On entend ici par « conforme » que l'ensemble formaté de données issu de la modification est similaire en structure et en format à l'ensemble formaté de données servant de référence.

L'automate est préférentiellement un module logiciel, c'est-à-dire un ensemble de code informatique configuré pour mettre en oeuvre des actions. Par conséquent, l'automate est configuré pour mettre en oeuvre les étapes des procédés 100, 200 et/ou 300 évoqués précédemment. Par exemple, l'automate comprend des instructions qui, lorsque mises en oeuvre par un système informatique, par exemple par un processeur compris dans ledit système informatique, permettent de mettre en oeuvre le procédé 100, le procédé 200 et/ou le procédé 300.

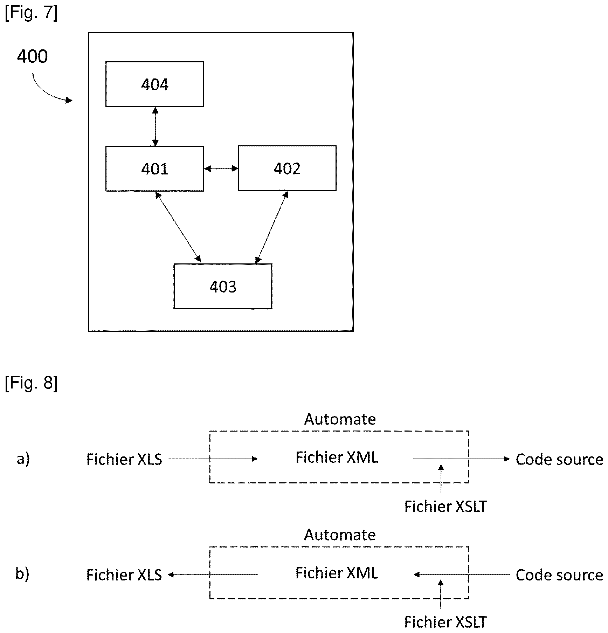

Un autre aspect de l'invention concerne donc le système 400 informatique, tel qu'illustré sur la figure 7. Ce système 400 est donc configuré pour mettre en oeuvre les fonctionnalités de l'automate, c'est-à-dire les procédés 100, 200 et/ou 300. A ce titre, le système 400 comprend le processeur 401 pour mettre en oeuvre les instructions comprises dans l'automate. Cet automate peut être compris dans une mémoire 402 du système 400, par exemple une mémoire volatile ou une mémoire non-volatile. Autrement dit, le système 400 comprend donc en mémoire des instructions pour mettre en oeuvre l'un des procédés 100, 200 et/ou 300 précédemment évoquées en exécutant ces instructions via le processeur 401.

Le système 400 peut également comprendre un module de communication 404, configuré pour permettre la mise en oeuvre de l'étape d'obtention selon l'étape 110 du procédé 100, l'étape 210 du procédé 200 et/ou l'étape 310 du procédé 300, et/ou permettre une émission selon l'étape 130 du procédé 100, l'étape 160 du procédé 100, l'étape 250 du procédé 200, l'étape 333 du procédé 300 et/ou l'étape 350 du procédé 300.

Le système 400 peut également comprendre un module d'affichage configuré pour afficher l'alerte, selon l'étape 130 du procédé 100 et/ou l'étape 333 du procédé 300, et ainsi informer l'utilisateur qu'il y a une incohérence dans l'ensemble de données de référence.

Dans un mode de réalisation :
- L'ensemble de données de référence, utilisé par le procédé 100, le procédé 200 et/ou le procédé 300 est compris dans un fichier qui est dans un format de type tableur construit selon la règle de construction, par exemple un fichier au format XLS ou XLSX ;
- L'ensemble formaté de données, utilisé par le procédé 100, le procédé 200 et/ou le procédé 300 est compris dans un fichier qui est dans un format de type balisage générique, par exemple un fichier au format XML ;
- L'ensemble de règles de transcription et/ou de rétrotranscription sont compris dans un fichier établi dans un langage de transformation de type fonctionnel, par exemple un fichier au format XSLT.

Dans un tel mode de réalisation, ainsi qu'illustré sur la figure 8, le code source est généré par l'automate ains que présenté sur la figure 8a, selon le procédé 100, par conversion du contenu du fichier XLS ou XLSX, comprenant l'ensemble de données de référence, en le fichier XML, comprenant l'ensemble formaté de données, lequel est ensuite transcrit en code source en se basant sur l'ensemble de règles de conversion comprises dans le fichier XSLT. Par ailleurs, l'ensemble de données de référence peut être construit par l'automate ainsi que présenté sur la figure 8b, selon le procédé 200, par transcription du code source en le fichier XML comprenant l'ensemble formaté de données en se basant sur l'ensemble de règles de rétrotranscription comprises dans le fichier XSLT, puis par conversion du fichier XML en le fichier XSL ou XSLX.

Le fichier XML peut être basé sur des structures de listes ou de listes de listes, ce qui le rend adaptatif à tout type de modèle, pour être transcrit en code source de n'importe quelle application de MDM ou rétro-converti en ensemble de données de référence.

A titre d'exemple, le fichier de type tableur peut être structuré en plusieurs catégories, lesquelles définissent le modèle, chacune correspondant à un ensemble d'attributs à renseigner. Ces catégories peuvent porter, par exemple, sur l'architecture interne de l'organisation voulant mettre en place le modèle de MDM (liste des entités, liste des unités opérationnelles, liste des membres, etc.). Chaque catégorie peut comporter un ou plusieurs attributs à renseigner, tels que la liste des entités de l'organisation, accompagnées d'une adresse, d'un nom de l'entité, d'une adresse de l'entité, etc.

Encore à titre d'exemple, le fichier de type balisage générique, vers lequel est converti le fichier de type tableur, peut alors être dans une structure sous forme de listes, chacune correspondant à une catégorie renseignée dans le fichier de type tableur. Chaque liste peut également comprendre une ou plusieurs listes. Par exemple, une liste peut correspondre aux entités de l'organisation, dans laquelle une liste des entités est répertoriée, où chacune des entités est une liste d'attributs portant sur les attributs renseignés dans le tableau. Il s'agit, par exemple, d'une liste d'attributs définis par des balises au sens du format XML.

Toujours à titre d'exemple, le fichier en langage de transformation de type fonctionnel comprend des instructions, rédigées dans le format fonctionnel, pour expliquer la mise en oeuvre de chaque règle de transcription. Par exemple, ce fichier comprend des fonctions informatiques pour parcourir la liste de catégories et parcourir chaque attribut (c'est-à-dire les balises) de chaque liste ou chaque liste de listes de catégorie afin d'afférer chaque contenu d'attribut (c'est-à-dire le contenu de la balise) à un ensemble d'instructions dans le code source à générer. Le code source est, par exemple, généré dans un format EBX^{®} pour être mis en oeuvre par l'application TIBCO^{®}. Dans le cas d'une rétrotranscription, ce fichier permet l'opération inverse, à savoir construire les listes de catégories et les attributs correspondants, sous forme de balise, dans le fichier de type balisage générique, à partir du code source existant.

A titre d'illustration, le tableur comprend la liste des membres de l'organisation à chacun desquels est attribué un matricule comportant deux lettres (pour l'entité à laquelle le membre est rattaché) et une suite de huit chiffres. L'automate vérifie alors que matricule comporte bien deux lettres puis huit chiffres et indique une incohérence si ce matricule n'est pas dans le bon format (par exemple parce que le nombre de lettres ou de chiffres n'est pas en accord avec la règle de format d'un matricule). Lorsqu'aucune incohérence n'est détectée, l'automate convertit la liste des membres et de leur matricule en liste de listes de balises dans le fichier de type balisage générique. L'automate applique ensuite les règles de transcription décrites dans le fichier en langage de transformation de type fonctionnel et qui indiquent comment doivent être transcrites ces informations (la liste des membres et le contenu des balises) pour être interprétables comme étant un contenu de code source par l'application de MDM désirée. A la fin de la transcription, le code source est généré par l'automate.

Inversement, toujours à titre d'illustration, l'automate rétro-transcrit le code source en liste de balises (comportant les matricules de la liste de membres) dans le fichier de type balisage générique à partir des règles de transcription comprises dans le fichier en langage de transformation de type fonctionnel (lequel peut décrire les règles réciproques ou inverses de celles contenues dans le fichier de règles pour la transcription). Le fichier de type balisage générique est rétro-converti par l'automate en fichier de type tableur, comprenant au format tableur la liste des membres et leur attribut correspondant au matricule.

A nouveau à titre d'illustration, l'automate peut être mis en oeuvre pour mettre en cascade la rétrotranscription du code source en fichier de type tableur puis sa transcription en un autre code source, pour une autre application de MDM. Alternativement, la rétro-conversion en fichier de type tableur et conversion de ce fichier en fichier de type balisage générique n'est pas obligatoire et le code source peut être directement généré depuis le fichier de type balisage générique en appliquant les règles de transcription comprises dans le fichier en langage de transformation de type fonctionnel afférent.

## Revendications

1. Procédé (100), mis en oeuvre par ordinateur, de génération d'un code source (50) lisible par une application de gestion de données de référence, le procédé comprenant :
- Convertir (140) un ensemble (20) de données de référence en un ensemble (30) formaté de données selon un ensemble de règles de conversion ;
- Transcrire (150), selon un ensemble (40) de règles de transcription, l'ensemble (30) formaté de données en code source (50) lisible par l'application de gestion de données de référence.

2. Procédé (100) selon la revendication précédente, comprenant, en outre, la transmission (160) du code source (50) à l'application de gestion de données de référence.

3. Procédé (100) selon l'une des revendications précédentes, comprenant :
- Détecter (120) une incohérence dans l'ensemble (20) de données de référence par comparaison avec un ensemble de règles de contrôle et/ou un précédent ensemble (20) de données de référence ;
et dans lequel la conversion (140) et la transcription (150) sont mises en oeuvre lorsqu'aucune incohérence dans l'ensemble (20) de données de référence n'est détectée.

4. Procédé (200), mis en oeuvre par ordinateur, de génération d'un ensemble (20) de données de référence depuis un code source (50) lisible par une application de gestion de données de référence, le procédé comprenant :
- Transcrire (220), selon un ensemble (40') de règles de rétrotranscription, le code source (50) en un ensemble (30) formaté de données ;
- Convertir (230) l'ensemble (30) formaté de données en l'ensemble (20) de données de référence selon un ensemble de règles de rétro-conversion.

5. Procédé (200) selon la revendication précédente, comprenant :
- Détecter (240) une incohérence dans l'ensemble (20) de données de référence par comparaison avec un ensemble de règles de contrôle et/ou un précédent ensemble (20) de données de référence.

6. Procédé (300), mis en oeuvre par ordinateur, de mutation d'un premier code source (50a), lisible par une première application de gestion de données, en un deuxième code source (50b) lisible par une deuxième application de gestion de données, le procédé comprenant :
- Transcrire (320), selon un ensemble (40') de règles de rétrotranscription, le premier code source (50a) en un ensemble (30) formaté de données;
- Transcrire (340), selon un ensemble de règles de transcription, l'ensemble (30) formaté de données en le deuxième code source (50b).

7. Procédé (300) selon la revendication précédente, dans lequel le premier code source (50a) est rétro-transcrit en un premier ensemble (30a) formaté de données, et comprenant :
- Convertir (331) le premier ensemble (30a) formaté de données en un ensemble (20) de données de référence selon un ensemble de règles de rétro-conversion ;
- Convertir (334) l'ensemble (20) de données de référence en un deuxième ensemble (30b) formaté de données selon un ensemble de règles de conversion, le deuxième code source (50b) étant transcrit à partir du deuxième ensemble (30b) formaté de données.

8. Procédé (300) selon la revendication précédente, comprenant :
- Détecter (332) une incohérence dans l'ensemble (20) de données de référence par comparaison avec un ensemble de règles de contrôle et/ou un précédent ensemble (20) de données de référence ;
et dans lequel la conversion (334) de l'ensemble (20) de données de référence en le deuxième ensemble (30b) formaté de données est mise en oeuvre lorsqu'aucune incohérence dans l'ensemble (20) de données de référence n'est détectée.

9. Procédé (100, 200, 300) selon l'une des revendications précédentes, dans lequel l'ensemble (20) de données de référence est construit conformément à au moins une règle de construction.

10. Procédé (100, 200, 300) selon l'une des revendications précédentes, dans lequel :
- L'ensemble (20) de données de référence est compris dans un fichier qui est dans un format de type tableur construit selon la au moins une règle de construction ;
- L'ensemble (30) formaté de données est compris dans un fichier qui est dans un format de type balisage générique ;
- L'ensemble de règles de transcription et/ou de rétrotranscription sont compris dans un fichier établi dans un langage de transformation de type fonctionnel.

11. Procédé (100, 200, 300) selon la revendication précédente, dans lequel le fichier comprenant l'ensemble (20) de données de référence est au format XLS ou XLSX, le fichier comprenant l'ensemble (30) formaté de données est au format XML, et le fichier comprenant l'ensemble de règles de transcription et/ou de rétrotranscription est au format XSLT.

12. Système informatique (400) configuré pour mettre en oeuvre un procédé (100, 200, 300) selon l'une des revendications précédentes.

13. Produit programme d'ordinateur comprenant des instructions qui, quand le programme est exécuté sur un ordinateur, conduisent celui-ci à mettre en oeuvre les étapes du procédé (100, 200, 300) selon l'une des revendications 1 à 11.

14. Support d'enregistrement lisible par ordinateur comprenant des instructions qui, lorsqu'elles sont exécutées par un ordinateur, conduisent celui-ci à mettre en oeuvre les étapes du procédé (100, 200, 300) selon l'une des revendications 1 à 11.
